Europäisches Patentamt

European Patent Office

Office européen des brevets

(19)

(11) Publication number: **0 281 232**

**A1**

(12) **EUROPEAN PATENT APPLICATION**

(21) Application number: 88300534.0

(22) Date of filing: 22.01.88

(51) Int. Cl.4: **A23L 3/36** , C09K 5/00

(30) Priority: 09.02.87 US 12196
09.02.87 US 12197

(43) Date of publication of application:
07.09.88 Bulletin 88/36

(84) Designated Contracting States:
DE FR GB IT

(71) Applicant: CASTLETON, INC.
Sunrise Tech Center 3235 Sunrise Boulevard
Suite C,
Rancho Cordova California 95670(US)

(72) Inventor: Coelho, Philip H.
121 Gioto Way
Folsom California, 95630(US)
Inventor: Comerchero, Victor
175 Ravenna Way
Folsom California, 95630(US)

(74) Representative: Wilkinson, Stephen John et al
5 Quality Court Chancery Lane
London WC2A 1HZ(GB)

(54) Direct contact cooling and freezing of articles with halocarbon heat transfer liquids.

(57) Direct contact cooling or freezing of articles immersed in or sprayed with a low freezing temperature liquid preferably comprising a mixture of a chlorofluorocarbon (CFC 13) and at least one of a group of flourocarbons minimizes migration of toxins in the heat transfer liquid to the articles.

EP 0 281 232 A1

# DIRECT CONTACT COOLING AND FREEZING OF ARTICLES WITH HALOCARBON HEAT TRANSFER LIQUIDS

## Background of the Invention

The present invention relates to the art of direct contact cooling or freezing of articles and, more particularly, to the direct contact cooling or freezing of articles in which contamination of the article by migration to the article of toxins in the heat transfer fluid must be avoided. Such is particularly the case when the articles to be chilled or frozen are intended for human or animal consumption such as foods or dietary supplements, or during the ultra rapid freezing of blood plasma and the like.

## The Prior Art

Direct contact heat transfer liquids such as liquid nitrogen and liquid carbon dioxide are well known and are used in extremely low temperature applications such as cryogenic freezing which requires expensive equipment to maintain the liquid state of the coolant by the proper combination of pressure and low temperature to prevent evaporation and consequent loss of the vapor to atmosphere. Since there is a direct relationship between, for example, frozen food that tastes fresh and the rate at which the food is frozen, some of the more expensive foods are cryogenically frozen with liquid nitrogen, etc. despite the high freezing costs. However, for the economical freezing of less sensitive foodstuffs, plasma, and the like, the extreme low temperatures of liquid nitrogen and liquid carbon dioxide and attendant expense of the specialized equipment to handle it are not deemed cost effective.

Most conventional prior art food freezers comprise open air refrigeration units in which the heat transfer fluid is air. Although it is well known that liquids are more efficient than gases as heat transfer fluids, when freezing or chilling foodstuffs and the like, direct contact with the heat transfer fluid is acceptable only if the fluid is substantially non-toxic and/or has tolerable levels of migration of toxins to food. Air or sometimes water is thus used for cooling of foodstuffs.

Conventional air freezers which require from three to six hours to lower the temperature of plasma in thin wall containers, typically plastic bags, from about 20° C to -30° C, are ordinarily used for the freezing of blood plasma. Repeated opening and closing of the freezer doors results in excessive ice build up on the freezer coils from accumulation of ambient moisture in the air. The ice build up, which must be periodically removed, at a cost of heat buildup and significant electrical usage, together with the warming of the freezer chamber every time the door is opened and closed results in a necessarily inefficient and slow refrigeration process.

As will be seen below, complex refrigeration apparatus for use in handling the direct contact heat transfer liquids disclosed herein is not required nor is any particular type of chiller needed; however, suitable apparatus for immersion or spray contact of the articles to be frozen or chilled are described in EP-A-01744170.

Apparatus for immersion or spray contact of plasma in a heat transfer liquid will preferably have a relatively small chamber size and multiple freezing compartments so that repeated opening and closing of the small freezer doors does not expose the whole freezing chamber to ambient air. The inefficiency of conventional air freezers caused by ice buildup on the freezer coils can be eliminated if the freezer coils are not subject to contact by moisture laden air. For high efficiency, the coils will be submerged in a heat transfer liquid that is immiscible with water so that ice is not permitted to encase the coils.

It is also known that the percentage recovery of blood soluble proteins such as Factor 8, fibrinogin, fibronectin and AHF is adversely affected by delays in placing the plasma bags into the freezer and by prolonged freezing times since blood soluble proteins continue to decay until a temperature of about -30° C is reached. Direct contact of the plasma bags with a heat transfer liquid to reduce the freezing time has heretofore not been though commercially feasible since known heat transfer fluids which are operable in the liquid state were either too expensive to maintain in the liquid state due to the extreme low temperatures required for some, such as liquid nitrogen or liquid oxygen, or the liquids were considered too toxic for direct contact with plasma bags, or like alcohol, had other unacceptable characteristics such as flammability and miscibility with water.

Chlorofluorocarbon refrigerants such as the Freon (trademark of the Dupont Company) compositions have previously been employed in closed loop non-direct contact refrigeration systems in which the circulating refrigerant is never permitted to come into direct contact with the articles to be chilled. Toxins present in refrigerants of this type have, with one exception noted below, prevented these refrigerants from being approved by regulatory authorities such as the United States Food and Drug Administration (FDA) for direct contact with foodstuffs.

To date is it believed that only one chlorofluorocarbon, Freon 12, (dichlorodifluoromethane) has ever been approved by the FDA for direct contact with human food. This composition is, however, only marginally suitable for use in immersion or spray contact freezing of foodstuffs because of its relatively low boiling point (-30° C) which results in the loss of product to atmosphere despite expensive recovery systems and the consequent expense of regular replacement of lost fluid. A suitable direct contact heat transfer liquid must therefore also have a suitably high boiling point above normal ambient temperatures, preferably above 50° C, in order to maintain tolerable losses due to evaporation.

Brief Description of the Drawing

Figure 1 is a graph showing the freezing rates of plasma containers immersed in various direct contact heat transfer liquids.

Figure 2 is a graph showing CFC (chloroflourocarbon) 113 concentration in plasma vs. temperature for a 45 minute immersion in a liquid mixture of CFC 113 and $C_6F_{14}$.

Detailed Description of the Invention

For the purposes intended, a suitable heat transfer liquid preferably will have all of the following properties:

a) a freezing point sufficiently below 0° C and at least as low as -30° C for plasmas so that articles to be chilled or frozen can be sprayed with or immersed in a chilled liquid bath for the minimum amount of time to achieve the desired temperature reduction;

b) a boiling point above ordinary ambient temperature and preferably above 50° C so that undue loss of heat transfer fluid to atmosphere through evaporation does not take place;

c) be essentially colorless, odorless, non-flammable, and be substantially non-toxic or be of such a nature that toxins present do not readily migrate to foodstuffs or other articles during the time of direct contact therewith;

d) have good thermal conductivity;

e) have a low viscosity and low surface tension so that excess liquid will readily drain off of frozen or chilled product as it is removed from the liquid;

f) be immiscible in water so that any unwanted water in the heat transfer liquid can easily be removed to prevent ice build up;

g) be denser than water so that accumulated water will float as ice for easy removal; and

h) be non-reactive with inks used to mark the outside of plasma containers or bags.

Tests have been performed using the chlorofluorocarbon (CFC) composition sold under the Freon 113 trademark alone and with the addition of various amounts of $C_6F_{14}$ as direct contact heat transfer liquids so as to determine the degree of migration of contaminant toxins from the heat transfer liquid to the product being cooled. The test results are summarized in Tables I and II. As seen therein, it has been determined that the above objectives can be attained by a heat transfer liquid comprising the chlorofluorocarbon 1,1,2 trichloro-1,2,2 trifluoro-ethane (Freon 113), herein referred to as CFC 113, alone or in mixtures thereof with various amounts of the fluorocarbon perfluorohexane ($C_6F_{14}$), or other chemically similar fluorocarbons including perfluoropentane ($C_5F_{12}$), perfluoromethylcyclohexane ($C_7F_{14}$), perfluoroheptane ($C_7F_{16}$), perfluoromonomethyldimethylcyclohexanes ($C_7F_{14}/C_8F_{16}$), perfluorodecalin isomers ($C_1F_{18}$), mixed perfluorodecalin and methyldecalin isomers ($C_{10}F_{18} + C_{11}F_{20}$), and perflourinated polyethers (-[OCF($CF_3$)$CF_2$]$_n$-(OCF$_2$)$_m$). These fluorocarbons are all commercially available fluorinated hydrocarbons sold under the FLUTEC trademark by ICS Chemicals Limited. A particularly suitable composition comprises a mixture of from 0.5% to 2.0% by weight of perfluorohexane ($C_6F_{14}$) and the remainder CFC 113 (1,1,2 trichloro 1,2,2 trifluoro ethane) with the surprising result of a substantial reduction in the

TABLE I

| | Substance | Freezing Temp. | Boiling Temp. | Migration to Shrimp | | Residual After Cooking | |
|---|---|---|---|---|---|---|---|
| | | | | Dry | Wet | Dry | Wet |
| 1) | CFC 113 | −35° C | 47.6° C | 590 ± 10ppm | 300 ± 10ppm | 100ppm | 60 ± 5ppm |
| 2) | 99 Parts (WT.) CFC 113 1 Part (WT.) $C_6F_{14}$ | −36° C | 48.1° C | 450 ± 10ppm | 145 ± 10ppm | 60ppm | 10 ± 2ppm |
| 3) | 95 Parts (WT.) CFC 113 5 Parts (WT.) $C_6F_{14}$ | −39° C | 49.1° C | 390 ± 10ppm | 100ppm | | 3 ± 2ppm |
| 4) | 99.5 Parts (WT.) CFC113 0.5 Parts (WT.) $C_6F_{14}$ | −36° C | 47.9° C | 460 ± 10ppm | 190 ± 10ppm | | 8 ± 2ppm |

amounts of toxins which migrated to foodstuffs, plasma or other products immersed in the liquid mixture.

The tests performed for which the results are summarized in Table I are set forth in the following Examples.

Example 1 - Freezing Temperature Migration to Blotted Dry Shrimp Exposed to Direct Contact with CFC 113

Raw shrimp each weighing approximately 4 grams were first removed from a tank of water, blotted dry and were then immersed for 3 minutes in a liquid bath of commercially pure CFC 113 maintained at a temperature of - 30 C. The shrimp were found to be completely frozen when removed from the bath.

The shrimp were them removed from the CFC 113 bath and allowed to set for 3 minutes to permit resilual CFC 113 to drain off of the shrimp before testing for migration of the CFC 113 to the shrimp. Gas chromatography testing revealed a residue of about 600 parts per million (ppm) of CFC 113 in the raw shrimp.

Example 2 - Freezing Temperature Migration to Blotted Dry Shrimp Exposed to Direct contact with 99/1 by Weight Mixture of CFC 113 and $C_6F_{14}$

The process of Example 1 was followed with the exception that the shrimp were immersed for 3 minutes in a bath comprising a liquid mixture of 99 parts by weight of CFC 113 and 1 part by weight of $C_6F_{14}$ maintained at a temperature of -30° C. The removed shrimp were completely frozen.

Substantial reduction in the amount of CFC 113 present in the shrimp to about 450 ppm is experienced.

Example 3 - Freezing Temperature Migration to Dry Shrimp Exposed to Direct Contact with 95/5 by Weight Mixture of CFC 113 and $C_6F_{14}$

The process of Example 1 was repeated using the mixture composition set forth above. The test results showed a migration of about 390 ppm of CFC 113 to the shrimp.

Example 4 - Freezing Temperature Migration to Dry Shrimp Exposed to Direct contact with 99,5/0.5 weight Mixture of CFC 113 and $C_6F_{14}$

The process of Example 1 was again repeated using the mixture composition set forth above. The test results showed a migration of about 460 ppm of CFC 113 to the dry shrimp.

Example 5 - Freezing Temperature Migration to Wet Shrimp Exposed to Direct Contact with CFC 113

The process of Example 1 was performed with the exception that the shrimp were not blotted dry to remove residual water therefrom prior to immersion into the CFC 113. The purpose was to determine the effect, if any, of allowing some water to remain on the shrimp during the freezing process. The expected ice barrier on the shrimp caused by the freezing of the water in the CFC 113 bath resulted in approximately 300 ppm of residual CFC 113 in the shrimp. There is effectively about a 50% reduction to be expected in CFC 113 residuals in the shrimp if wet rather than dry shrimp are frozen in the CFC 113 bath.

Example 6 - Freezing Temperature Migration to Wet Shrimp Exposed to 99/1 by Weight Mixture of CFC 113 and $C_6F_{14}$

The process of Example 3 was repeated with the only change comprising the use of a freezing bath identical with that used in Example 2. Approximately 150 ppm of CFC 113 were found to have migrated to the wet frozen shrimp as compared with the approximately 450 ppm which migrated to the dry shrimp as shown in Example 2. This constitutes a 67% reduction to be expected when wet instead of dry shrimp are frozen in a 99/1 wt. mixture as set forth above.

Example 7 - Freezing Temperature Migration to Wet Shrimp Exposed to Direct Contact with 95/5 by Weight Mixture of CFC 113 and $C_6F_{14}$

The process of Example 4 was followed with the exception that the proportions of the freezing bath components were changed to 95/5 weight percent to determine the effect, if any, of slight increases in the proportion of $C_6F_{14}$ present in the bath. Residual CFC 113 present in the shrimp was about 100 ppm.

Example 8 - Freezing Temperature Migration to Wet Shrimp Exposed to Direct Contact with 99.5/0.5 by Weight Mixture of CFC 113 and $C_6F_{14}$

The process of Example 4 was followed with the exception that the proportions of the freezing bath components were changed to 99.5/0.5 weight percent to determine the effect, if any, of slight decreases in the proportion of $C_6F_{14}$ present in the bath. Residual CFC 113 present in the shrimp was about 200 ppm.

In all of the above Examples, no significant detectable amounts of $C_6F_{14}$ were found in the shrimp.

It has been further discovered that cooking of raw shrimp frozen in accordance with the processes disclosed in the above Examples 8 in boiling water for 3 minutes resulted in further reduction in the residual CFC 113 in the shrimp to levels of about 100 ppm for the frozen shrimp of Example 1; of about 60 ppm for the shrimp of Example 2; of about 60 ppm for the shrimp of Example 3; of about 10 ppm for the shrimp of Example 4; of about 3 ppm for the shrimp of Example 5; and about 18 ppm for the shrimp of Example 6.

The relatively high vapor pressures of CFC 113 and $C_6F_{14}$ and the mixtures of these compositions disclosed in the above Examples is important in further reducing the residual levels of the freezing bath toxins in the food and also reducing the losses to evaporation of the bath components from the freezer. A recovery system that places the frozen food under vacuum or negative pressure, even briefly, reduces the amounts of the CFC 113 retained on the shrimp by about 50% as compared with the amounts retained when the freezing is conducted under atmospheric conditions. This recovered CFC 113 can then be returned to the freezing bath.

From the foregoing description it will be seen that the chlorofluorocarbon CFC 113 and mixture of small amounts ranging from 0.5 - 5.0 volume percent of certain fluorocarbons, particularly $C_6F_{14}$, therewith results in compositions having properties which render them particularly suitable as a heat transfer liquid for direct contact with foodstuffs and other products intended for human or veterinary use. Careful control of the mixed amounts of $C_6F_{14}$ enables variation of the freezing point of the heat transfer liquid so that the time of the freezing process can easily be reduced when desired by using a liquid with a suitably low freezing point and maintaining the liquid temperature near said freezing point while immersion or spray contacting foodstuffs therewith. Improvements result when the foodstuffs are wet rather than dry before contact with the freezing bath since it is postulated that the ice layer formed by the water on the surface of the foodstuff acts as a barrier to the migration of toxins from the liquid freezing bath. Cooking of the foodstuff further reduces the toxin concentration, apparently due to evaporation of the toxins from the foodstuff at the high temperatures encountered in the cooking process.

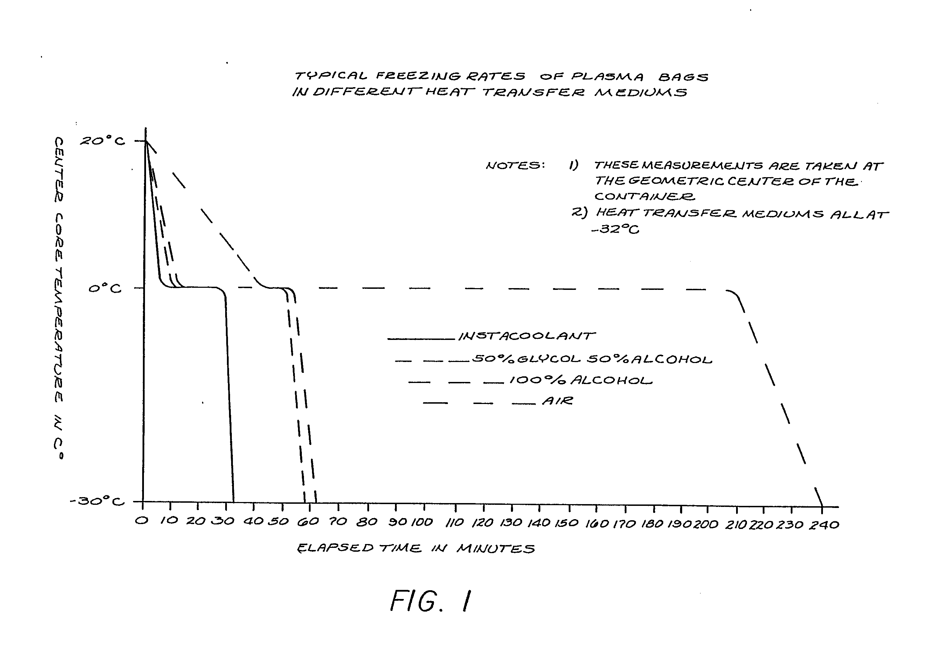

By the selective use of mixtures of the above compositions, toxin migration through the walls of the plastic bags or bottles ordinarily used to freeze plasma may be kept to a tolerable level despite the direct contact of the liquid heat transfer fluid with the bags or bottles. Since water is not miscible in the heat transfer liquid, ice does not form on the evaporation cooling coils immersed in the liquid. Freezing times of about 30 minutes for plasma bags immersed in liquid maintained at -35° C are made possible by use of the liquid heat transfer fluids disclosed herein as compared with typical prior art freezing times in air freezers of about three to four hours. Figure 1 shows typical freezing rates for plasma bags.

TABLE II

| | Substance | Freezing Temp. | Boiling Temp. | Room Temperature Migration | | Freezing Temperature Migration | |
|---|---|---|---|---|---|---|---|
| | | | | 2 Mil PVC Bag | 4 Mil Bottle | 2 Mil PVC Bag | 4 Mil Bottle |
| 1) | CFC 113 | -35° C | 47.6° C | 21 ppm | 12 ppm | 10 ppm | 5 ppm |
| 2) | 99 Parts (WT.) CFC 113<br>1 Part (WT.) $C_6F_{14}$ | -36° C | 48.1° C | 15 ppm | 9 ppm | 7 ppm | 2 ppm |
| 3) | 95 Parts (WT.) CFC 113<br>5 Parts (WT.) $C_6F_{14}$ | -39° C | 49.1° C | 12 ppm | 7 ppm | 6 ppm | 1 ppm |
| 4) | 99.5 Parts (WT.) CFC113<br>0.5 Parts (WT.) $C_6F_{14}$ | -36° C | 47.9° C | 18 ppm | 11 ppm | 9 ppm | 3 ppm |

The tests performed for which the results are summarized in Table II are set forth in the following Examples.

Example 1 - Room Temperature Test for Migration of CFC 113 through Plastic Bags and Bottles to Plasma

Tests were run on standard 650 milliliter capacity PVC bags having a wall thickness of 2 mils and on standard 850 ml. capacity polypropylene bottles having a wall thickness of 4 mils. The bags and bottles were filled with plasma and were immersed in pure CFC 113 at a temperature of 22° C for 45 minutes to determine ppm migration of CFC 113. Gas chromatography testing of the plasma revealed that 21 parts per million (ppm) of CFC 113 had migrated through the bag walls to the plasma and that 12 ppm had migrated through the thicker walls of the bottles to the plasma contained therein.

Example 2 - Freezing Temperature Test for Migration of CFC 113 Through Plastic Bags and Bottles to Plasma

This test was performed with the same parameters as Example 1 except that the temperature of the CFC 113 bath in which the bags and bottles of plasma were immersed was maintained at the lower temperature of -30° C during the test. Analysis of the plasma in the bags revealed that only 10 ppm of CFC 113 was present therein and that only 5 ppm was present in the plasma which had been placed in the polypropylene bottles.

Example 3 - Room Temperature Test for Migration of Components of 9/1 weight Mixture of CFC 113 and $C_6F_{14}$ Through Plastic Bags and Bottles to Plasma

The procedure of Example 1 was repeated using a bath comprising a 99 parts CFC 113 and 1 part by weight $C_6F_{14}$ mixture in the immersion bath. Only 15 ppm of CFC 113 were found to have migrated through the walls of the plastic bags to the plasma and only 9 ppm had migrated through the walls of the bottles.

Example 4 - Freezing Temperature Test for Migration of Components of 99/1 Weight Mixture of CFC 113 and $C_6F_{14}$ Through Plastic Bags and Bottles to Plasma

The same procedure used in Example 3 was followed except that the immersion bath temperature was maintained at -30° C during the testing. Testing of the plasma revealed a migration through the bag walls of 7 ppm of CFC 113 and a migration through the bottle walls of 2 ppm CFC 113.

Example 5 - Room Temperature Test for Migration of Components of 95/5 Weight Mixture of CFC 113 and $C_6F_{14}$ Through Plastic Bags and Bottles to Plasma

The procedure of Example 3 was followed but using an immersion bath comprising a mixture as set forth above. Test results showed 12 ppm of CFC 113 migration through the bags and 7 ppm migration through the bottles.

Example 6 - Freezing Temperature Test for Migration of Components of 95/5 Weight Mixture of CFC 113 and $C_6F_{14}$ Through Plastic Bags and Bottles to Plasma

The tests were performed like Example 4, except the proportions of the components of the freezing bath were altered to 95 parts by weight of CFC 113 and 5 parts by weight of $C_6F_{14}$. The test results indicated that slight increases in the $C_6F_{14}$ proportion further lowered the amount of CFC 113 migration through the container walls to 6 ppm through the bag walls and to 1 ppm through the bottle walls.

Example 7 - Room Temperature Test for Migration of Components of 99.5/0.5 Weight Mixture of CFC 113 and $C_6F_{14}$ Through Plastic Bags and Bottles to Plasma

The test results using this mixture of components in the immersion bath revealed 18 ppm migration of CFC 113 through the bags and 11 ppm through the bottles.

Example 8 - Freezing Temperature Test for Migration of Components of 99.5/0.5 Weight Mixture of CFC 13 and $C_6F_{14}$ Through Plastic Bags and Bottles to Plasma

The results of this test revealed 9 ppm of CFC 113 had migrated to the plasma through the bags and 3 ppm had migrated to the plasma through the bottles.

No detectable amounts of $C_6F_{14}$ were found in any of the plasma samples.

Figure 1 shows plasma temperature vs time for plasma samples immersed in the 99/1 weight mixture of Example 4 and, for comparison, in a typical prior art mixture of 50% alcohol and 50% glycerol. As can be seen therein, the freezing times are drastically reduced by use of the mixture and process of Example 4. The plateau reached at 0° C is greatly reduced by using liquids as disclosed and claimed herein. This reduction of crystallization time is believed to result in less damage during freezing of the recoverable fraction in the plasma.

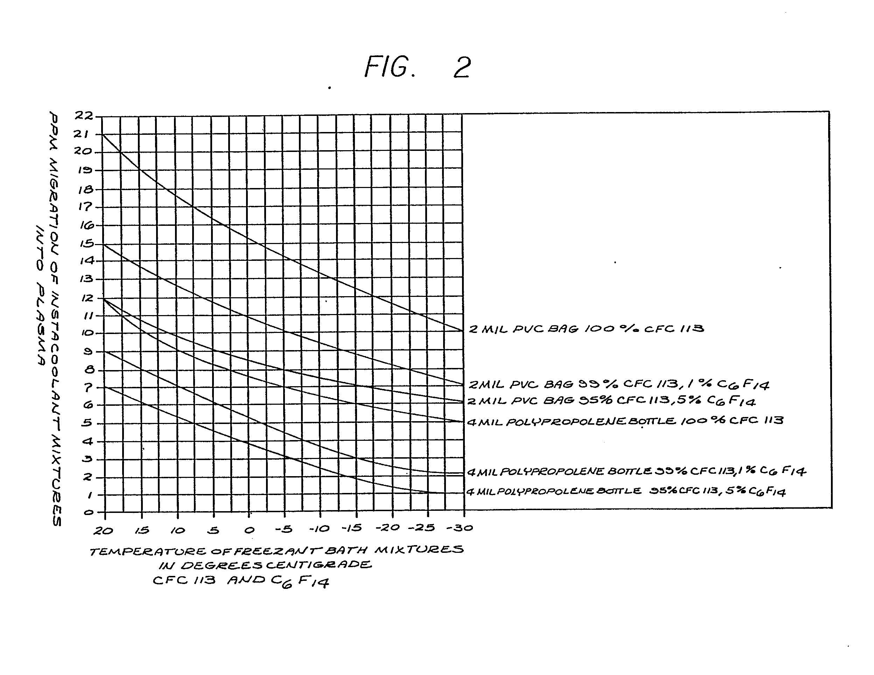

Figure 2 shows the graphical relationship between CFC 113 concentration in plasma frozen in blood-plasma pooling bags versus temperature for a 45 minute immersion. The mathematical equation which expresses the relationship is

$$\ln C = -811.51/T + 5.639$$

where

$\ln$ = natural log

$C$ = CFC 113 concentration in ppm by wt.

$T$ = C + 273.2 C

It has also been found that the yield of useful blood soluble proteins recovered from the frozen plasma by subsequently performed known freeze drying processes increases by about 10 % which is believed due to the ultra rapid freezing made possible by direct contact immersion of the plasma bags in the heat transfer liquids disclosed herein.

From the foregoing description it will be seen that mixtures of the chlorofluorocarbon Freon 113 (CFC 113) and small amounts ranging from 0.5 - 5.0 weight percent of certain fluorocarbons, particularly $C_6F_14$, therewith results in compositions having properties which render them particularly suitable as a heat transfer liquid for direct contact freezing of plasma bags. Careful control of the mixed amounts of $C_6F_{14}$ enables variation of the freezing point of the heat transfer liquid so that the time of the freezing process can easily be reduced when desired by using a liquid with a suitably low freezing point and maintaining the liquid temperature near its freezing point while immersion or spray contacting the plasma containers therewith.

It should be noted that the fraction of $C_6F_{14}$ which has migrated through the container walls is nil, and that the CFC 113 fraction which has migrated is within tolerable levels. Since the vapor pressure of CFC is thirty - fold higher than that of water, freeze drying of plasma in typical vacuum freeze dryers draws off substantially all of the CFC 113 fraction which remains after the direct contact freezing of the plasma. Precipitation products such as Factor 8 which is a life sustaining staple to the hemophiliac population of the world prepared from plasmas frozen as taught herein are sufficiently free of CFC 113 toxin that maximum patient intravenous exposure to CFC 113 is well under one gram per year assuming worse case conditions.

It will be appreciated that the chilling or freezing of foodstuffs in thin wall containers such as cans or plastic bags or the like having negligible heat retention in the container walls is contemplated by the present invention in addition to the direct contact of foodstuffs by the liquid heat transfer fluids disclosed herein.

## Claims

1. A process of chilling articles comprising the steps of exposing said articles to direct contact with a heat transfer liquid selected from the group consisting of the chlorofluorocarbon 1,1,2 trichloro-1,2,2 trifluoroethane (Freon 113), and the fluorocarbons perfluoropentane ($C_5F_{12}$), perfluorohexane ($C_6F_{14}$), perfluoromethylcyclohexane ($C_7F_{14}$), perfluoroheptane ($C_7F_{16}$), perfluoromonomethyl-dimethylcyclohexanes ($C_7F_{14}/C_8F_{16}$), perfluorodecalin isomers ($C_{10}F_{18}$), mixed perfluorodecalin and methyldecalin isomers ($C_{10}F_{18} + C_{11}F_{20}$), and perfluorinated polyethers ([OCF(CF$_3$)CF$_2$]$_n$-(OCF$_2$)$_m$ or mixtures of said chlorofluorocarbon with at least one of said fluorocarbons, maintaining said liquid at a temperature sufficiently low enough to cool said articles to the desired temperature in the desired amount of time.

2. The process of claim 1, wherein said articles are exposed to direct contact with said heat transfer liquid by immersing said articles in a bath of said liquid.

3. The process of claim 1, wherein said articles are exposed to direct contact with a continuous flow of heat transfer liquid over the surface of said articles.

4. The process of any one of claims 1 to 3, wherein said heat ransfer liquid is a mixture of said chlorofluorocarbon and perfluorohexane.

5. The process of claim 4, wherein said heat transfer liquid comprises from 0.5 to 5.0 percent by weight of perfluorohexane.

6. The process of claim 5, wherein said heat transfer liquid comprises from 0.5 to 1.5 percent by weight of perfluorohexane.

7. The process of any one of claims 1 to 6, wherein said articles are intended for internal consumption by humans or animals.

8. The process of claim 7, further comprising the step of cooking said articles prior to consumption.

9. The process of anyone of claims 1 to 6, wherein said articles are containers of plasma.

10. The process of claim 9, wherein said heat transfer liquid is maintained at a temperature of -30°C or below.

11. A heat transfer liquid for use in the process of claim 1, the liquid selected from the group consisting of the chlorofluorocarbon 1,1,2 trichloro-1,2,2 trifluoro-ethane (Freon 113), and the fluorocarbons perfluoropentane ($C_5F_{12}$), perfluorohexane ($C_6F_{14}$), perfluoromethylcyclohexane ($C_7F_{14}$), perfluoroheptane ($C_7F_{16}$), perfluoromonomethyldimethylcyclohexanes ($C_7F_{14}/C_8F_{16}$), pferfluorodecalin isomers ($C_1F_{18}$), perfluorodecalin and methyldecalin isomers ($C_{10}F_{18}$ + $C_{11}F_{20}$), and perfluorinated polyethers, or mixtures of said chlorofluorocarbon with one of said fluorocarbons.

12. A heat transfer liquid according to claim 11, comprising a mixture of said chlorofluorocarbon and perfluorohexane.

13. A heat transfer liquid according to claim 12, wherein said perfluorohexane is present in an amount ranging fro 0.5 to 5.0 percent by weight.

14. A heat transfer liquid according to claim 13, wherein said perfluorohexane is present in an amount ranging from 0.5 to 1.5 percent by weight.

TYPICAL FREEZING RATES OF PLASMA BAGS
IN DIFFERENT HEAT TRANSFER MEDIUMS

NOTES: 1) THESE MEASUREMENTS ARE TAKEN AT THE GEOMETRIC CENTER OF THE CONTAINER
2) HEAT TRANSFER MEDIUMS ALL AT -32°C

INSTACOOLANT
50% GLYCOL 50% ALCOHOL
100% ALCOHOL
AIR

CENTER CORE TEMPERATURE IN C°

ELAPSED TIME IN MINUTES

FIG. 1

0 281 232

FIG. 2

PPM MIGRATION OF INSTACOOLANT MIXTURES INTO PLASMA

2 MIL PVC BAG 100 % CFC 113

2 MIL PVC BAG 99 % CFC 113, 1 % C$_6$F$_{14}$
2 MIL PVC BAG 95% CFC 113, 5% C$_6$F$_{14}$
4 MIL POLYPROPOLENE BOTTLE 100 % CFC 113

4 MIL POLYPROPOLENE BOTTLE 99% CFC 113, 1 % C$_6$F$_{14}$
4 MIL POLYPROPOLENE BOTTLE 95% CFC 113, 5% C$_6$F$_{14}$

TEMPERATURE OF FREEZANT BATH MIXTURES
IN DEGREES CENTIGRADE
CFC 113 AND C$_6$F$_{14}$

0 281 232

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 792 180  (K.D. DASTUR)<br>* abstract; examples 1,2; claims 1-3 * | 1,3,7 | A 23 L  3/36<br>C 09 K  5/00 |
| A | US-A-3 812 040  (H.J. BORCHARDT)<br>* claim 1 * | 1 | |
| D,A | EP-A-0 174 170  (CASTLETON, INC.)<br>* claims 1-9,19,20 * | 1,7 | |

TECHNICAL FIELDS
SEARCHED (Int. Cl.4)

A 23 L  3/00
C 09 K  5/00

The present search report has been drawn up for all claims

| Place of search | Date of completion of the search | Examiner |
|---|---|---|
| BERLIN | 14-05-1988 | SCHULTZE D |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................
& : member of the same patent family, corresponding
   document

EPO FORM 1503 03.82 (P0401)